# EUROPEAN PATENT APPLICATION

(11) **EP 4 830 802 A1**
(43) Date of publication of application: **28.10.2026**
(21) Application number: 25747418.9
(22) Date of filing: 03.01.2025
(51) Int. Cl.: A63F 13/52, G06T 1/20, G06T 1/60

(54) **FRAME RATE IMPROVING METHOD, ELECTRONIC DEVICE AND STORAGE MEDIUM**

(30) Priority: 01.02.2024 CN 202410144890
(71) Applicant: Honor Device Co., Ltd., Shenzhen, Guangdong 518040 (CN)
(72) Inventor: XIA, Wenchao, Shenzhen, Guangdong 518040 (CN); XIAO, Yuwei, Shenzhen, Guangdong 518040 (CN)
(74) Representative: Henselmann, Alexander Gerhard
(86) International application number: PCT/CN2025/070413
(87) International publication number: WO 2025/161842

(57) **Abstract**

Embodiments of this application disclose a frame rate improvement method, an electronic device, and a storage medium, and relate to the field of display processing technologies. The method includes: when it is determined that a frame rate of a game picture needs to be improved, creating a frame interpolation rendering thread; generating a frame interpolation image in the frame interpolation rendering thread based on frame rendering data; and inserting the frame interpolation image before or after an original image generated by a main rendering thread based on the frame rendering data. Therefore, when the frame rate of the game picture needs to be improved, the electronic device creates the frame interpolation rendering thread. The frame interpolation rendering thread may share a part of rendering tasks of the main rendering thread, so that the main rendering thread can have more time to perform processing for a complex scenario, real-time interaction, and the like, thereby reducing frame freezing, a delay, and the like caused by overload of the main rendering thread. In this way, a stable target frame rate can be maintained in rendering of the game picture, a rendering effect of the game picture is improved, and game experience of a user is further enhanced.

## Description

This application claims priority to Chinese Patent Application No. 202410144890.7, filed with the China National Intellectual Property Administration on February 1, 2024 and entitled "FRAME RATE IMPROVEMENT METHOD, ELECTRONIC DEVICE, AND STORAGE MEDIUM", which is incorporated herein by reference in its entirety.

### TECHNICAL FIELD

This application relates to the field of display processing technologies, and in particular, to a frame rate improvement method, an electronic device, and a storage medium.

### BACKGROUND

With the development of science and technology, to improve game experience of users, screen resolutions of electronic devices such as mobile phones and computers are continuously improved, and game scenarios are also continuously enriched. However, a high-resolution screen and a complex game scenario require the electronic device to have a stronger computing capability and image processing capability. This causes an increase in power consumption of the electronic device. In addition, because hardware resources of the electronic device are limited, if the hardware resources of the electronic device cannot provide a corresponding computing capability and image processing capability, problems such as heat generation, a shortened battery life, and a frame drop in a game may occur in the electronic device. This deteriorates game experience of the user.

In a related technology, to resolve the foregoing problem of the frame drop in the game, a frame interpolation (Interpolation) technology is developed. The frame interpolation technology is a technology that improves a frame rate by inserting a new frame between existing frames, thereby reducing game power consumption and improving game smoothness.

However, even if the frame interpolation technology is applied, a game load may be excessively heavy because the game scenario is excessively rich, or a rendering effect of the game scenario is poor because the hardware resources of the electronic device are excessively limited, which reduces game experience of the user.

### SUMMARY

An objective of this application is to provide a frame rate improvement method, an electronic device, and a storage medium, so that a stable target frame rate can be achieved in rendering of a game scenario, thereby improving game experience of a user.

According to a first aspect, an embodiment of this application provides a frame rate improvement method, which is applied to an electronic device such as a mobile phone or a computer. The method includes: when it is determined that a frame rate of a game picture needs to be improved, creating a frame interpolation rendering thread; generating a frame interpolation image in the frame interpolation rendering thread based on frame rendering data; and inserting the frame interpolation image before or after an original image generated by a main rendering thread based on the frame rendering data. Therefore, when the frame rate of the game picture needs to be improved, the electronic device creates the frame interpolation rendering thread. The frame interpolation rendering thread may share a part of rendering tasks of the main rendering thread, so that the main rendering thread can have more time to perform processing for a complex scenario, real-time interaction, and the like, thereby reducing frame freezing, a delay, and the like caused by overload of the main rendering thread. In this way, a stable target frame rate can be maintained in rendering of the game picture, a rendering effect of the game picture is improved, and game experience of a user is further enhanced.

In some specific implementations, when it is determined that the frame rate of the game picture needs to be improved, creating the frame interpolation rendering thread includes: when the electronic device is in a game scenario and the electronic device meets a frame interpolation condition, creating the frame interpolation rendering thread, where the frame interpolation condition includes one or more of a load value of a graphics processing unit of the electronic device being greater than a first load threshold, a load value of a central processing unit of the electronic device being greater than a second load threshold, and a real-time game frame rate value of the electronic device being less than a frame rate threshold. Therefore, when the frame rate of the game picture needs to be improved, the electronic device creates the frame interpolation rendering thread. The frame interpolation rendering thread may share a part of rendering tasks of the main rendering thread, so that the main rendering thread can have more time to perform processing for a complex scenario, real-time interaction, and the like, thereby reducing frame freezing, a delay, and the like caused by overload of the main rendering thread. In this way, a stable target frame rate can be maintained in rendering of the game picture, a rendering effect of the game picture is improved, and game experience of a user is further enhanced.

In some specific implementations, the frame rendering data in the frame interpolation rendering thread is transferred by the main rendering thread to the frame interpolation rendering thread, and the frame rendering data includes one or more of texture data and camera data.

In some specific implementations, the frame rendering data in the frame interpolation rendering thread is created by the frame interpolation rendering thread, and the frame rendering data includes context data.

In some specific implementations, a method in which the frame interpolation rendering thread receives the frame rendering data includes: After the frame rendering data in the main rendering thread is transferred to a circular queue of the frame interpolation rendering thread, the frame interpolation rendering thread receives the frame rendering data based on an order of the frame rendering data in the circular queue. Therefore, when the frame rate of the game picture needs to be improved, the electronic device creates the frame interpolation rendering thread. The frame interpolation rendering thread may share a part of rendering tasks of the main rendering thread, so that the main rendering thread can have more time to perform processing for a complex scenario, real-time interaction, and the like, thereby reducing frame freezing, a delay, and the like caused by overload of the main rendering thread. In this way, a stable target frame rate can be maintained in rendering of the game picture, a rendering effect of the game picture is improved, and game experience of a user is further enhanced.

In some specific implementations, a method in which the frame interpolation rendering thread receives the frame rendering data includes: After a sequence number of the frame rendering data in the main rendering thread is copied to a shared data structure of the main rendering thread, the frame interpolation rendering thread receives the frame rendering data by matching the sequence number of the frame rendering data in the shared data structure. Therefore, the frame interpolation rendering thread easily and conveniently learns which texture data is used for rendering, thereby improving subsequent rendering efficiency.

In some specific implementations, after inserting the frame interpolation image generated by the frame interpolation rendering thread based on the frame rendering data before or after the original image generated by the main rendering thread based on the frame rendering data, the method further includes: when it is determined that the frame rate of the game picture does not need to be improved, generating an original image based on the frame rendering data in the main rendering thread. This is because an independent frame interpolation rendering thread can significantly improve a frame rate under a heavy game load, but creating an independent frame interpolation rendering thread is not suitable for all games. Especially when a game has a light load, using an independent frame interpolation rendering thread may cause an increase in power consumption in comparison with a non-independent frame interpolation rendering thread. Therefore, different solutions should be switched based on a specific situation.

In some specific implementations, when it is determined that the frame rate of the game picture does not need to be improved, generating the original image based on the frame rendering data in the main rendering thread includes: when the electronic device meets a frame interpolation stop condition, generating the original image based on the frame rendering data in the main rendering thread, where the frame interpolation stop condition includes one or more of a real-time game frame rate value of the electronic device being greater than a frame rate threshold, execution duration of the main rendering thread being less than a first duration threshold, and execution duration of the frame interpolation rendering thread being less than a second duration threshold. This is because an independent frame interpolation rendering thread can significantly improve a frame rate under a heavy game load, but creating an independent frame interpolation rendering thread is not suitable for all games. Especially when a game has a light load, using an independent frame interpolation rendering thread may cause an increase in power consumption in comparison with a non-independent frame interpolation rendering thread. Therefore, different solutions should be switched based on a specific situation.

In some specific implementations, after generating the original image based on the frame rendering data in the main rendering thread, the method further includes: when a thread deletion condition is met, deleting the frame interpolation rendering thread.

In some specific implementations, the when a thread deletion condition is met, deleting the frame interpolation rendering thread includes: obtaining a historical switching frequency, where the historical switching frequency is a ratio of a quantity of historical switching times to target time, and the quantity of historical switching times is a quantity of times of switching from generating a game picture based on the frame interpolation rendering thread and the main rendering thread to generating a game picture based on the main rendering thread; and if the historical switching frequency is less than a frequency threshold, deleting the frame interpolation rendering thread. This is because when independent thread frame interpolation is switched to non-independent thread frame interpolation, the frame interpolation rendering thread may be deleted or may be retained. Specifically, whether to be deleted or retained may be determined based on an actual situation of the game.

In some specific implementations, when the thread deletion condition is met, deleting the frame interpolation rendering thread includes: obtaining historical switching time, where the historical switching time is time at which a game picture is generated last time based on the frame interpolation rendering thread and the main rendering thread; and if a time difference between the historical switching time and current time is greater than a third duration threshold, deleting the frame interpolation rendering thread. This is because when independent thread frame interpolation is switched to non-independent thread frame interpolation, the frame interpolation rendering thread may be deleted or may be retained. Specifically, whether to be deleted or retained may be determined based on an actual situation of the game.

According to a second aspect, this application discloses an electronic device. The electronic device includes a processor and a memory. The memory is configured to store a computer-executable command, and the processor is configured to execute the computer-executable command stored in the memory, to enable the processor to perform the frame rate improvement method in the first aspect.

According to a third aspect, this application discloses a computer-readable storage medium. The computer-readable storage medium stores a computer program or instructions. When the computer program or the instructions are run, the frame rate improvement method in the first aspect is implemented.

According to a fourth aspect, this application provides a computer program product. When the computer program product runs on a computer, the computer is enabled to perform the frame rate improvement method in the first aspect.

According to a fifth aspect, this application discloses a frame rate improvement apparatus, which is used in an electronic device such as a mobile phone or a computer. The apparatus includes a creation module, a generation module, and a frame interpolation module. The creation module is configured to: when it is determined that a frame rate of a game picture needs to be improved, create a frame interpolation rendering thread. The generation module is configured to generate a frame interpolation image in the frame interpolation rendering thread based on frame rendering data. The frame interpolation module is configured to insert the frame interpolation image before or after an original image generated by a main rendering thread based on the frame rendering data. Therefore, when the frame rate of the game picture needs to be improved, the electronic device creates the frame interpolation rendering thread. The frame interpolation rendering thread may share a part of rendering tasks of the main rendering thread, so that the main rendering thread can have more time to perform processing for a complex scenario, real-time interaction, and the like, thereby reducing frame freezing, a delay, and the like caused by overload of the main rendering thread. In this way, a stable target frame rate can be maintained in rendering of the game picture, a rendering effect of the game picture is improved, and game experience of a user is further enhanced.

Compared with a conventional technology, this application has the following beneficial effects:
This application discloses a frame rate improvement method, an electronic device, and a storage medium. When the electronic device needs to improve a frame rate of a game picture, an independent frame interpolation rendering thread may be created. Then, a frame interpolation image generated by the frame interpolation rendering thread based on frame rendering data is inserted before or after an original image generated by a main rendering thread based on the frame rendering data, to form a game picture whose frame rate is improved. Therefore, the created frame interpolation rendering thread may share a part of rendering tasks of the main rendering thread, so that the main rendering thread can have more time to perform processing for a complex scenario, real-time interaction, and the like, thereby reducing frame freezing, a delay, and the like caused by overload of the main rendering thread. Further, when the main thread is blocked, if the frame interpolation rendering thread is not blocked, the frame interpolation rendering thread may take over more rendering tasks. After the main thread returns normal, the frame interpolation rendering thread has completed a part or even all of rendering work. In this case, the main rendering thread may quickly catch up with the rendering progress, and merge the rendered original image into the frame interpolation image rendered by the frame interpolation rendering thread. In this way, coherence and smoothness of overall rendering are maintained, a stable target frame rate can be maintained in rendering of the game picture, a rendering effect of the game picture is improved, and game experience of a user is further enhanced.

### BRIEF DESCRIPTION OF DRAWINGS

FIG. 1 is a diagram of a heavy game load scenario;
FIG. 2 is a diagram of multi-thread rendering;
FIG. 3 is a diagram of interpolating a frame in a game rendering thread;
FIG. 4 is a flowchart of a frame rate improvement method according to an embodiment of this application;
FIG. 5 is a diagram of a frame interpolation rendering thread according to an embodiment of this application;
FIG. 6A is a diagram of a dual queue method according to an embodiment of this application;
FIG. 6B is a diagram of a circular queue according to an embodiment of this application;
FIG. 7 is a diagram of performing single frame interpolation by using a frame interpolation rendering thread according to an embodiment of this application;
FIG. 8 is a diagram of overcoming multi-frame interpolation blockage by using a frame interpolation rendering thread according to an embodiment of this application;
FIG. 9 is a diagram of a hardware structure of an electronic device according to an embodiment of this application; and
FIG. 10 is a diagram of a frame rate improvement apparatus according to an embodiment of this application.

### DESCRIPTION OF EMBODIMENTS

Technical terms involved in this application are first explained.

A frame interpolation (Interpolation) technology is a technology that improves a frame rate by inserting a new frame between existing frames, thereby reducing game power consumption and improving game smoothness. The frame interpolation technology is classified into a single frame interpolation (Single Frame Interpolation) technology and a multi-frame interpolation (Multi-Frame Interpolation) technology.

The single frame interpolation technology is a simple frame interpolation technology. One additional frame is usually inserted between two adjacent original frames, making motion smoother between the two frames. The main goal of this method is to improve the frame rate of a video or a game, thereby improving the visual effect, through a few interpolated frames are generated.

The multi-frame interpolation technology is to insert a plurality of additional frames between two adjacent original frames to capture motion in more detail and improve the visual effect of a video or a game. This method may be more effective when dealing with fast movement or when a higher frame rate is required, but also adds computational burden.

Terms "first", "second", "third", and the like in the specification, claims, and drawings of this application are used to distinguish between different objects rather than to limit a specific order.

In embodiments of this application, words such as "example" or "for example" are used to represent giving an example, an illustration, or a description. Any embodiment or design scheme described as "example" or "for example" in embodiments of this application should not be explained as being more preferred or having more advantages than another embodiment or design scheme. In particular, the words such as "example" and "for example" as used to present related concepts in a specific manner.

As described above, a high-resolution screen and a complex game scenario require an electronic device to provide a stronger computing capability and image processing capability. This causes an increase in power consumption of the electronic device. In addition, because hardware resources of the electronic device are limited, if the hardware resources of the electronic device cannot provide the electronic device with a corresponding computing capability and image processing capability, phenomena such as heat generation, a shortened battery life, and a frame drop in a game may occur in the electronic device. This deteriorates game experience of a user.

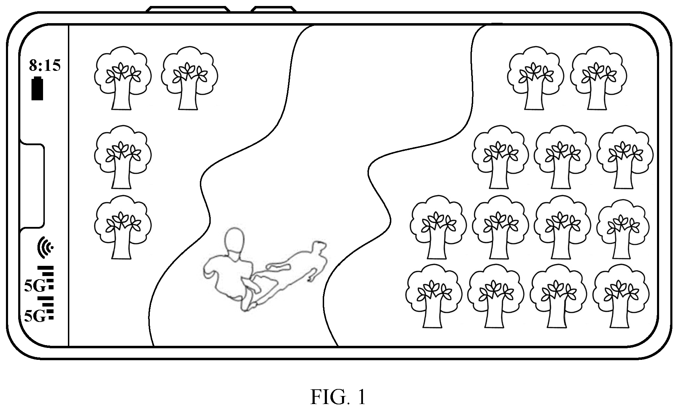

FIG. 1 is a diagram of a heavy game load scenario.

A heavy game load scenario is a scenario in which a game is overloaded during running due to complex factors such as a game picture, physical computing, or artificial intelligence logic processing. If an electronic device renders the heavy-load scenario shown in FIG. 1, and the electronic device cannot provide a corresponding computing capability and image processing capability, problems such as heat generation, a shortened battery life, and a frame drop in a game occurs in the electronic device.

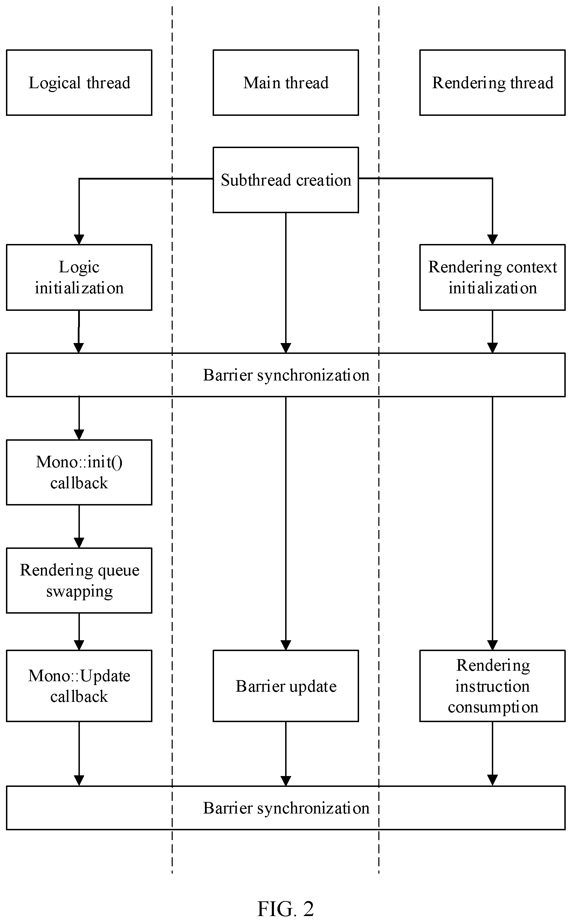

In a related technology, to resolve the foregoing problem of the frame drop in the game, a frame interpolation technology is developed. The frame interpolation technology is a method of adding a new frame between two frames to improve a frame rate, and can effectively reduce game power consumption and improve game smoothness. FIG. 2 is a diagram of multi-thread rendering. After a main thread creates two subthreads (that is, a logical thread and a rendering thread), the created logical thread performs logic initialization, and the rendering thread performs rendering context (context) initialization. After the two subthreads each completes initialization and the three threads all reach a barrier (Barrier), the logical thread updates a game resource to generate a queue of rendering instructions through steps such as Mono::init() callback, rendering queue swapping, and Mono::Update() callback. Then, the rendering thread renders a corresponding game picture by consuming a rendering instruction. In addition, after the main thread updates the barrier, the main thread, the logical thread, and the rendering thread perform barrier synchronization again. Then, a subsequent game scenario rendering step is performed.

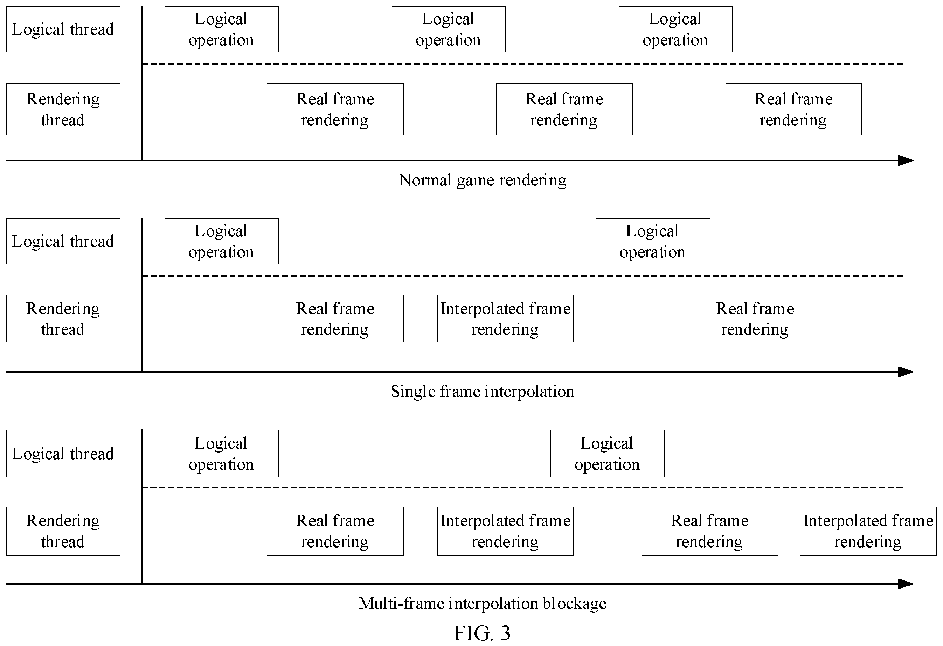

However, FIG. 3 is a diagram of interpolating a frame in a game rendering thread. If single frame interpolation or multi-frame interpolation is performed, the rendering thread simultaneously performs rendering of a real frame and an interpolated frame. As a result, rendering time of a game scenario is excessively long, and normal running of a logical thread is delayed, thereby causing a problem of blockage of game scenario rendering.

In view of this, this application discloses a frame rate improvement method, an electronic device, and a storage medium. When the electronic device needs to improve a frame rate of a game picture, an independent frame interpolation rendering thread may be created. Then, a frame interpolation image generated by the frame interpolation rendering thread based on frame rendering data is inserted before or after an original image generated by a main rendering thread based on the frame rendering data, to form a game picture whose frame rate is improved. Therefore, the created frame interpolation rendering thread may share a part of rendering tasks of the main rendering thread, so that the main rendering thread can have more time to perform processing for a complex scenario, real-time interaction, and the like, thereby reducing frame freezing, a delay, and the like caused by overload of the main rendering thread. Further, when the main thread is blocked, if the frame interpolation rendering thread is not blocked, the frame interpolation rendering thread may take over more rendering tasks. After the main thread returns normal, the frame interpolation rendering thread has completed a part or even all of rendering work. In this case, the main rendering thread may quickly catch up with the rendering progress, and merge the rendered original image into the frame interpolation image rendered by the frame interpolation rendering thread. In this way, coherence and smoothness of overall rendering are maintained, a stable target frame rate can be maintained in rendering of the game picture, a rendering effect of the game picture is improved, and game experience of a user is further enhanced.

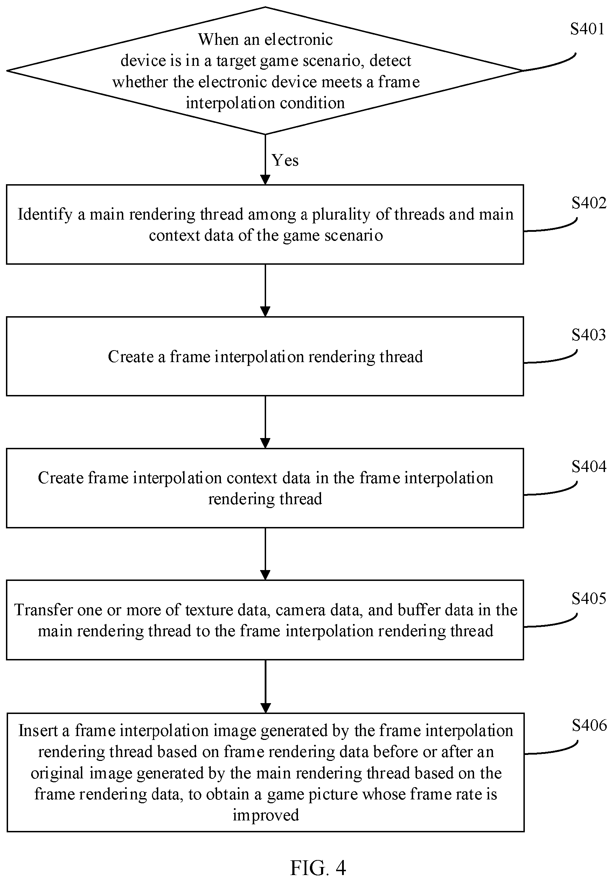

FIG. 4 is a flowchart of a frame rate improvement method according to an embodiment of this application. The method is applied to an electronic device such as a mobile phone or a computer, and includes:
S401: When the electronic device is in a target game scenario, detect whether the electronic device meets a frame interpolation condition. If the electronic device meets the frame interpolation condition, S402 is performed.

A target game is a game with a high frame rate requirement such as an action game, a shooting game, a racing game, a role-playing game, or a strategy game. The target game needs to ensure smooth display of a game picture, so that a player can make a decision and an operation more quickly. It should be noted that a specific target game is not limited in this application.

In some specific implementations, when the electronic device is in the target game scenario, and a load value of a graphics processing unit (Graphics Processing Unit, GPU) of the electronic device is greater than a first load threshold, step S402 may be performed.

The load value of the graphics processing unit indicates a quantity of tasks that are being executed by the graphics processing unit or an amount of data that is being processed by the graphics processing unit. A larger load value of the graphics processing unit indicates that the graphics processing unit is performing a more complex task or processing a larger amount of data, and more computing resources and image processing capabilities are required to ensure smooth display of the game picture. In addition, the load value of the graphics processing unit usually varies with complexity of the game picture. For example, when there are more characters or objects in the game picture, more complex light and shadow effects exist, or the game picture requires a higher resolution, the load value of the graphics processing unit may increase.

In some examples, the first load threshold may be 90%, 95%, or the like. In other words, if the load value of the graphics processing unit is greater than 90% or 95%, it indicates that the electronic device meets the frame interpolation condition, and step S402 may be performed. It should be noted that a specific first load threshold is not limited in this application.

It should be noted that the load value of the graphics processing unit may be monitored and measured by using various tools and software. In some examples, the load value of the graphics processing unit may be monitored and measured by using a task manager built in an operating system of the electronic device. In some other examples, the load value of the graphics processing unit may alternatively be monitored and measured by using third-party monitoring software that is for the graphics processing unit and that is connected to the electronic device. A specific monitoring and measurement method is not limited in this application.

In some other specific implementations, when the electronic device is in the target game scenario, and a load value of a central processing unit (Central Processing Unit / Processor, CPU) of the electronic device is greater than a second load threshold, step S402 may be performed.

The load value of the central processing unit is information about a sum of quantities of processes that are being processed and that are to be processed by the central processing unit in a period of time, and may also be understood as workload or a busy degree of the central processing unit. The load value of the central processing unit depends on a plurality of factors such as a quantity of applications running on the electronic device, a quantity of open programs, and a hardware configuration of the electronic device.

In some examples, the second load threshold may be 80%, 85%, or the like. In other words, if the load value of the central processing unit is greater than 80% or 85%, it indicates that the electronic device meets the frame interpolation condition, and step S402 may be performed. It should be noted that a specific second load threshold is not limited in this application.

In some other specific implementations, when the electronic device is in the target game scenario, and a real-time game frame rate value (Frames Per Second, FPS) of the electronic device is less than a frame rate threshold, step S402 may be performed.

In some examples, the frame rate threshold may be 40 FPS (a quantity of frames displayed per second), 60 FPS, or the like. In other words, if the real-time game frame rate value of the electronic device is less than 40 FPS or 60 FPS, it indicates that the electronic device meets the frame interpolation condition, and step S402 may be performed. It should be noted that a specific frame rate threshold is not limited in this application.

It may be understood that the foregoing description is an embodiment in which the frame interpolation condition is one of three conditions: the load value of the graphics processing unit is greater than the first load threshold, the load value of the central processing unit is greater than the second load threshold, and the real-time game frame rate value is less than the frame rate threshold. During actual application, the frame interpolation condition may alternatively be a plurality of the three conditions. This is not limited in this application.

S402: Identify a main rendering thread among a plurality of threads and main context data of the target game.

To improve performance and a response speed of the target game, the plurality of threads are used to process different tasks. For example, a logical thread is mainly responsible for processing core logic of the game, including a player input, a game status update, artificial intelligence computing, and the like. The logical thread usually cooperates closely with a main thread to ensure that status and behavior of the game are as expected. An audio thread is responsible for audio playback and sound effect processing of the game. The main rendering thread is mainly responsible for game scenario rendering work, for example, drawing a game scenario, a character, and a special effect.

In the game, the main rendering thread may be responsible for converting a three-dimensional model of the game scenario into a two-dimensional image, and displaying the two-dimensional image on a display of the electronic device. In some examples, the main rendering thread usually performs rendering of the game scenario by using graphics libraries or engines such as OpenGL, DirectX, Unity, Unreal Engine, Vulkan, and Metal. The libraries and engines provide a variety of tools and functions that enable the main rendering thread to perform rendering tasks efficiently. An independent main rendering thread is used, so that a computing-intensive rendering task can be separated from the main thread, thereby reducing burden of the main thread and improving rendering performance of the game.

Main context data (Context) of the game is data in which an OpenGL (Open Graphics Library) state machine records, during rendering, all information and status data required for rendering. For example, color data currently used for drawing in the game, data about whether there is lighting computing, and data about an enabled light source are recorded. It should be noted that context data of the game is one type of frame rendering data. For example, the context data may be one or more of a frame buffer object (Frame Buffer Object, FBO), a vertex array object (Vertex Array Object, VAO), a vertex buffer object (Vertex Buffer Object, VBO), and an element buffer object (Element Buffer Object, EBO).

In the game, there may be a plurality of threads and a plurality of pieces of context data. In this case, the main rendering thread and the main context data may be identified among the plurality of threads and the plurality of pieces of context data by identifying a quantity of image drawing instructions, because the main rendering thread and the main context data usually call the most image drawing instructions.

For ease of understanding, an example in which OpenGL is used as a rendering engine is used in subsequent embodiments for description. Graphics drawing instructions of OpenGL include glDrawArrays (for extracting data from array data to render basic graphic elements), glDrawElements (for drawing three-dimensional models), glDrawElementsInstanced (for specifying vertex data by using indexes and rendering a plurality of objects in one call), and the like. Therefore, all called graphics drawing instructions in the game may be intercepted, and a quantity of graphics drawing instructions called by each thread in the game may be counted. A thread with a largest count is the main rendering thread, and corresponding context data is the main context data.

The main rendering thread in the plurality of threads and the main context data of the target game are identified, so that relevant developers can better understand usage of threads and context in a game process and optimize performance and a response speed of the game. For example, if it is found, by identifying the main rendering thread in the plurality of threads and the main context data of the target game, that the main rendering thread is excessively busy in some cases, frame interpolation processing may be performed by using a subsequent step S403.

S403: Create a frame interpolation rendering thread.

The frame interpolation rendering thread may be created by using a thread library or a framework provided by the operating system of the electronic device. For example, the frame interpolation rendering thread may be created by using Pthreads (POSIX thread) or a thread class in a C++11 standard library. In some specific implementations, the frame interpolation rendering thread may be created by using the following code:

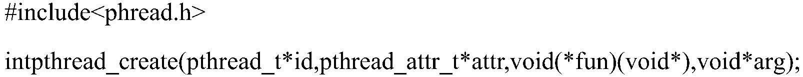

It should be noted that a specific method for creating the frame interpolation rendering thread is not limited in this application.

S404: Create frame interpolation context data in the frame interpolation rendering thread.

In some specific implementations, an embedded graphics library EGL is used as an example, and the frame interpolation context data may be created in the frame interpolation rendering thread by using the following code:
EGLContext eglCreateContext(EGLDisplaydisplay,
EGLConfig config,
EGLContext share_context,
EGLint const*attrib_list);

It should be noted that during creation of the frame interpolation context data, it needs to be specified that the frame interpolation context data can share a resource with the main context data, in other words, the frame interpolation context data needs to correspond to the main context data of the game. Specifically, share_context may be specified as an ID of the main rendering context data in a function corresponding to the frame interpolation context data, to implement resource sharing of the main context data and the frame interpolation context data.

The purpose of the resource sharing of the main context data and the frame interpolation context data is to improve rendering performance and efficiency of the game. The resource sharing can reduce overheads of resource replication and repeated loading, to improve a response speed and smoothness of the game.

S405: Transfer one or more of texture data, camera data, and buffer data in the main rendering thread to the frame interpolation rendering thread.

It should be noted that the texture data, the camera data (shader), and the buffer data (buffer) are frame rendering data. The texture data is usually a texture resource related to graphics rendering and is used to provide surface details and an appearance texture. For example, the texture data may include a main scenario, a user interface (UI), a depth map, and the like. The camera data is data that describes lighting status of an object surface during graphics rendering and is used to obtain a lighting model through computing, to determine visual effects such as color, brightness, and shadow on the object surface. The buffer data is a memory area used to store and process data during graphics rendering. In game development and graphics rendering, the buffer data is used to store the texture data, vertex data, pixel data, and the like for easy reading and writing during rendering.

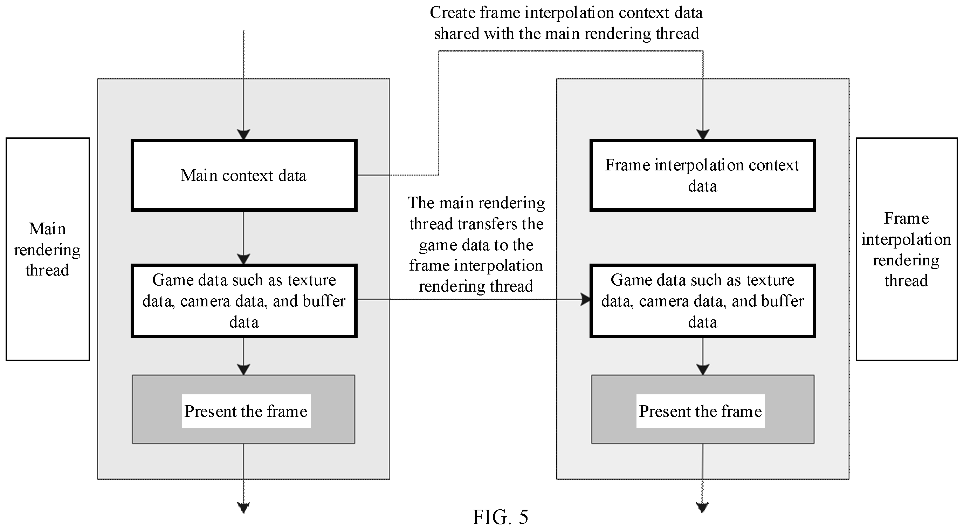

FIG. 5 is a diagram of a frame interpolation rendering thread according to an embodiment of this application. After the resource sharing of the main context data and the frame interpolation context data is set in step S404, the texture data, the camera data, and the buffer data may be shared.

In some specific implementations, to transfer the texture data of the game from the main rendering thread to the frame interpolation rendering thread for frame interpolation of the frame interpolation rendering thread, the following steps need to be performed:

The first step is to create a shared data structure in the main rendering thread. The shared data structure is space where the texture data is stored in a subsequent step. In this step, the electronic device uses OpenGL or another graphics library to create the shared data structure that allocate space in a memory of the electronic device for subsequent storage of the texture data.

The second step is to identify the texture data. When the game is running, the electronic device needs to be able to identify which resources are target resources that need to be used as the texture data, in other words, which texture data needs to be rendered.

The third step is to copy the texture data to the shared data structure. Once the texture data is identified, the electronic device copies the texture data to the previously created shared data structure.

The fourth step is to transfer the shared data structure including the texture data to the frame interpolation rendering thread. The populated shared data structure including the texture data is transferred from the main rendering thread to the frame interpolation rendering thread by using a global variable, a queue, a semaphore, or another inter-thread communication mechanism.

It may be understood that after the texture data is identified in the second step, a unique texture ID (that is, a sequence number of frame rendering data) may be further marked for the texture data. In this way, the texture ID is subsequently directly transferred to the frame interpolation rendering thread by using a global variable, a queue, a semaphore, or another inter-thread communication mechanism, so that the frame interpolation rendering thread easily and conveniently learns which texture data is used for rendering, thereby improving subsequent rendering efficiency.

It should be noted that a step of transferring the camera data and the buffer data of the game from the main rendering thread to the frame interpolation rendering thread is similar to the step of transferring the texture data of the game from the main rendering thread to the frame interpolation rendering thread. Details are not described herein again.

S406: Insert a frame interpolation image generated by the frame interpolation rendering thread based on frame rendering data before or after an original image generated by the main rendering thread based on the frame rendering data, to obtain a game picture whose frame rate is improved.

A data collision, a data deadlock, or another unpredictable contention problem may occur when the main rendering thread and the frame interpolation rendering thread simultaneously attempt to access or render same texture data, camera data, or buffer data. To avoid the contention problem caused by the main rendering thread and the frame interpolation rendering thread simultaneously accessing or rendering the same texture data, camera data, or buffer data, a proper synchronization mechanism needs to be used to coordinate operations between the two threads. In this case, the contention problem can be avoided from the root by using a data copy method, a dual queue method, or a circular queue (Circular Queue) method.

The data copy method is a method in which after all texture data, camera data, or buffer data in the main rendering thread is copied to the frame interpolation rendering thread, the main rendering thread performs rendering by using the texture data, camera data, or buffer data in the main rendering thread, and the frame interpolation rendering thread performs rendering by using texture data, camera data, or buffer data in the frame interpolation rendering thread, so that the two threads do not simultaneously attempt to access or render the same texture data, camera data, or buffer data.

An advantage of data copy is that the resource contention problem between the main rendering thread and the frame interpolation rendering thread can be avoided. However, in the data copy method, a large amount of texture data, camera data, or buffer data needs to be copied from the main rendering thread to the frame interpolation rendering thread. This causes large memory bandwidth overheads, reduces rendering efficiency and rendering performance, and improves rendering power consumption.

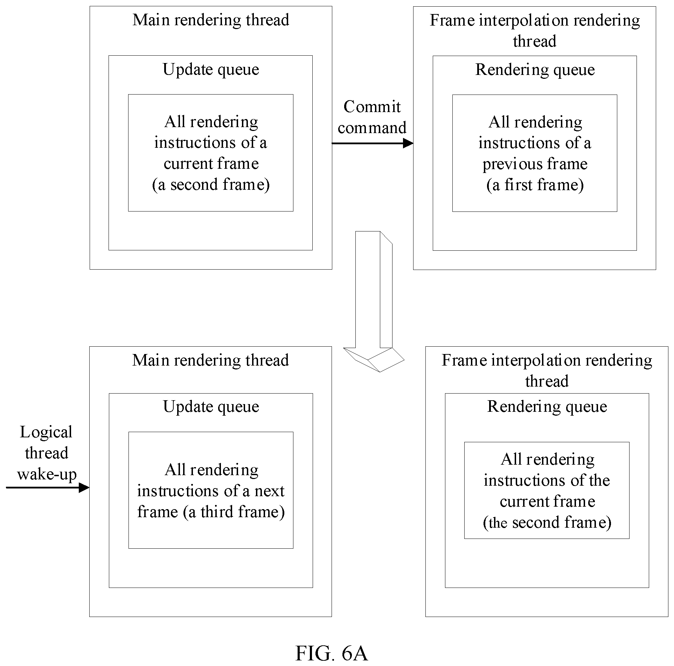

FIG. 6A is a diagram of a dual queue method according to an embodiment of this application. The dual queue method means that the main rendering thread and the frame interpolation rendering thread create one update queue and one rendering queue respectively before rendering of the game scenario starts. The main rendering thread first renders a current frame (a second frame) and places all rendering instructions for the current frame (the second frame) into the update queue. Simultaneously, the frame interpolation rendering thread is executing all rendering instructions for a previous frame (a first frame).

After placing all rendering instructions for the current frame (the second frame) into the update queue, the main rendering thread executes a commit command. After completing all rendering instructions for the previous frame (the first frame), the frame interpolation rendering thread swaps all rendering instructions in the update queue and the rendering queue in response to the commit command.

After swapping all rendering instructions, the frame interpolation rendering thread starts to perform frame interpolation rendering based on all new rendering instructions. After completing frame interpolation work of the current frame (the second frame), the frame interpolation rendering thread is suspended and waits for a next frame (a third frame). Simultaneously, the main rendering thread waits for the logical thread to be woken up. After logical thread is woken up, the main rendering thread continues to render the next frame (the third frame) and places all rendering instructions for the next frame (the third frame) into the update queue. By analogy, the foregoing procedure is repeatedly performed to continuously perform multi-thread rendering.

An advantage of the dual queue method is that the main rendering thread and the frame interpolation rendering thread can operate their queues respectively, without considering a resource contention problem caused by simultaneous access to same queue data by the two threads. However, because management and synchronization of the two queues (an update queue and a rendering queue) is involved, complexity of resource management is increased, and proper swap and synchronization of the queues need to be ensured to avoid data inconsistency or a conflict between the threads. In addition, synchronization operations between the threads, such as waiting and waking, may result in additional performance overheads. The synchronization operations need to be processed carefully to avoid unnecessary waiting and a performance bottleneck. Further, because queues are swapped at the end of rendering of one frame, there is still a possibility of rendering blockage.

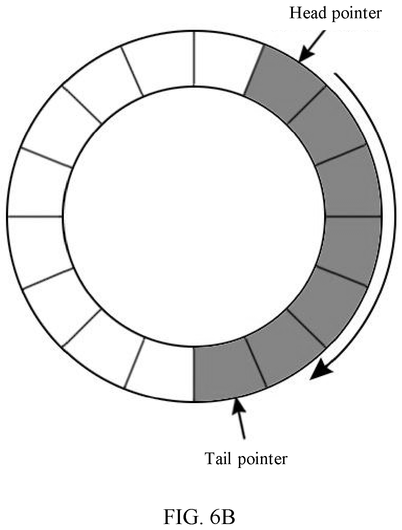

FIG. 6B is a diagram of a circular queue method according to an embodiment of this application. A circular queue is a linear data structure. The circular queue method means that a fixed-size array and two pointers (a head pointer and a tail pointer) are used to represent a start position and an end position of the queue in the frame interpolation rendering thread. Specifically, the head pointer represents the start location of the queue. Each time one piece of texture data, camera data, or buffer data is added to the queue, the head pointer moves forward by one bit, and each time one piece of texture data, camera data, or buffer data is removed from the queue, the head pointer moves backward by one bit. The tail pointer represents the end position of the queue, that is, a position of a queue tail. Each time one piece of texture data, camera data, or buffer data is added to the queue, the tail pointer moves backward by one bit, and each time one piece of texture data, camera data, or buffer data is removed from the queue, the tail pointer moves forward by one bit.

In the circular queue, when the queue is empty, both the head pointer and the tail pointer point to a 1^{st} position of the queue; and when the queue is full, both the head pointer and the tail pointer point to the last position of the queue. A rendering thread continuously adds texture data, camera data, or buffer data to the circular queue. If the circular queue is full, the rendering thread is blocked. A frame interpolation thread continuously removes texture data, camera data, or buffer data from the circular queue to perform frame interpolation. If the circular queue is empty, the frame interpolation thread is blocked.

A main feature of the circular queue is that when reaching the last position of the array, the head pointer or the tail pointer automatically returns to the first position. This enables the circular queue to achieve better space utilization. In addition, the circular queue does not need to synchronize the rendering thread with the frame interpolation thread every frame like the dual queue, and a delay is shorter than that of the dual queue.

In some specific manners, the frame interpolation rendering thread may further freely control frame sending time (that is, rendering time). Specifically, to achieve more stable frame rate performance, a difference in frame sending time between a real frame rendered by the main rendering thread and an interpolated frame rendered by the frame interpolation rendering thread may be first recorded. Then, frame sending time of a next interpolated frame rendered by the frame interpolation rendering thread is adjusted based on the difference in frame sending time.

It should be noted that an independent frame interpolation rendering thread can significantly improve a frame rate under a heavy game load, but creating an independent frame interpolation rendering thread is not suitable for all games. Especially when a game has a light load, using an independent frame interpolation rendering thread may cause an increase in power consumption in comparison with a non-independent frame interpolation rendering thread. Therefore, different solutions should be switched based on a specific situation.

In some specific implementations, if rendering of the game scenario is currently being performed based on the frame rendering data in the main rendering thread and the frame interpolation rendering thread, one or more of an actual game frame rate, execution duration of the rendering thread, and execution duration of the frame interpolation thread during frame interpolation may be collected. If one or more of a real-time game frame rate during a game being greater than a frame rate threshold, execution duration of the main rendering thread being less than a first duration threshold, and execution duration of the frame interpolation rendering thread being less than a second duration threshold is met, independent thread frame interpolation is switched to non-independent thread frame interpolation, in other words, rendering of the game scenario is performed based only on the frame rendering data in the main rendering thread.

It should be noted that when the independent thread frame interpolation is switched to the non-independent thread frame interpolation, the frame interpolation rendering thread may be deleted or may be retained. Specifically, whether to be deleted or retained may be determined based on an actual situation of the game.

In some specific implementations, some game scenarios change significantly. In this case, the frame interpolation rendering thread cannot be deleted and needs to be retained.

In some other specific implementations, a historical switching frequency or historical switching time may be recorded online.

Specifically, if the historical switching frequency is greater than or equal to a frequency threshold, the frame interpolation rendering thread cannot be deleted and needs to be retained. The historical switching frequency is a ratio of a quantity of historical switching times to target time, and the quantity of historical switching times is a quantity of times of switching from generating a game picture based on the frame interpolation rendering thread and the main rendering thread to generating a game picture based on the main rendering thread. In contrast, if the historical switching frequency is less than a frequency threshold, the frame interpolation rendering thread is deleted.

Specifically, if a time difference between the historical switching time and current time is less than or equal to a third duration threshold, the frame interpolation rendering thread cannot be deleted and needs to be retained. The historical switching time is time at which a game picture is generated last time based on the frame interpolation rendering thread and the main rendering thread. In contrast, if a time difference between the historical switching time and current time is greater than a third duration threshold, the frame interpolation rendering thread is deleted.

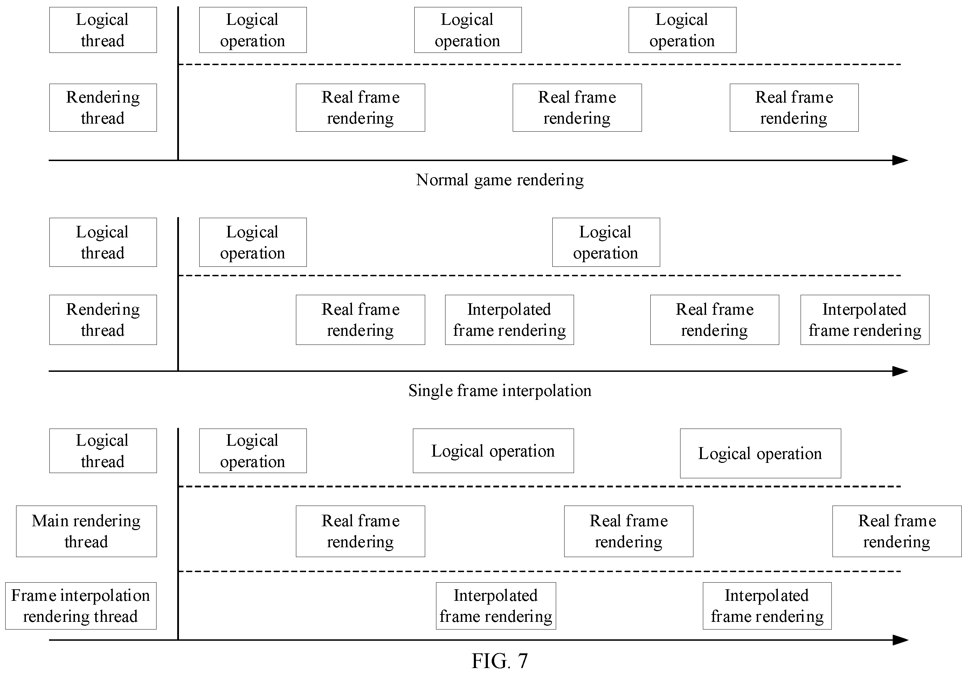

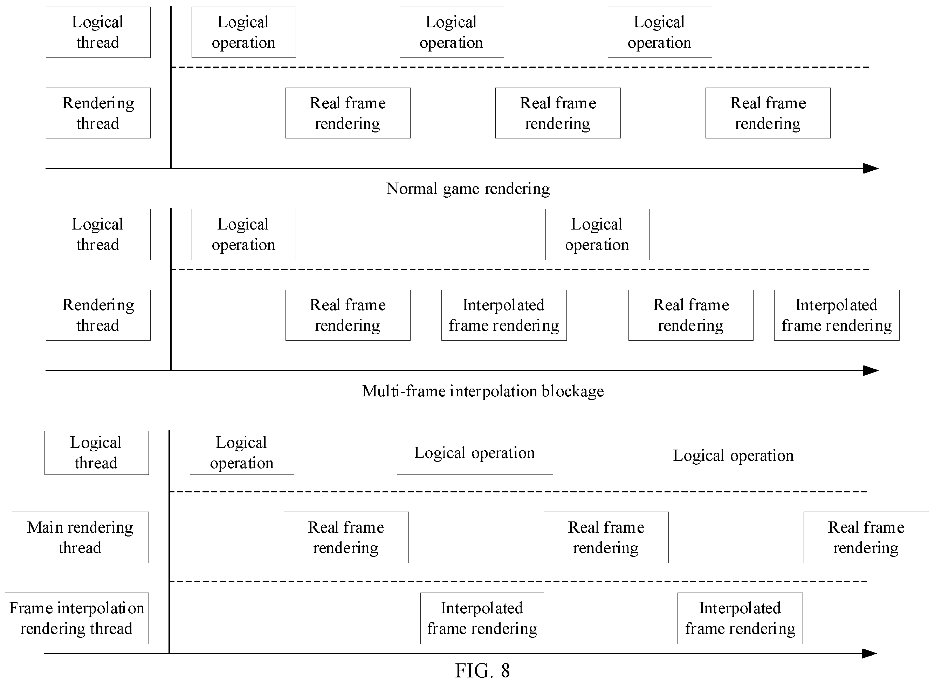

FIG. 7 is a diagram of performing single frame interpolation by using a frame interpolation rendering thread according to an embodiment of this application. FIG. 8 is a diagram of overcoming multi-frame interpolation blockage by using a frame interpolation rendering thread according to an embodiment of this application. In a conventional technology, if single frame interpolation or multi-frame interpolation is performed by using a multi-thread rendering technology, a rendering thread simultaneously performs rendering of a real frame and an interpolated frame. As a result, rendering time of a game scenario is excessively long, and normal running of a logical thread is delayed, thereby causing a problem of blockage of game scenario rendering. In this application, an independent frame interpolation rendering thread is created, so that a frame interpolation rendering task originally performed in the main rendering thread can be separated, thereby reducing burden of the main rendering thread, and significantly improving a rendering speed and rendering efficiency. This resolves a problem in which the frame rate cannot be full due to reasons such as a heavy game load and poor mobile phone performance, and provides smoother game experience.

In conclusion, this application discloses a frame rate improvement method. When an electronic device needs to improve a frame rate of a game picture, an independent frame interpolation rendering thread may be created. Then, a frame interpolation image generated by the frame interpolation rendering thread based on frame rendering data is inserted before or after an original image generated by a main rendering thread based on the frame rendering data, to form a game picture whose frame rate is improved. Therefore, the created frame interpolation rendering thread may share a part of rendering tasks of the main rendering thread, so that the main rendering thread can have more time to perform processing for a complex scenario, real-time interaction, and the like, thereby reducing frame freezing, a delay, and the like caused by overload of the main rendering thread. Further, when the main thread is blocked, if the frame interpolation rendering thread is not blocked, the frame interpolation rendering thread may take over more rendering tasks. After the main thread returns normal, the frame interpolation rendering thread has completed a part or even all of rendering work. In this case, the main rendering thread may quickly catch up with the rendering progress, and merge the rendered original image into the frame interpolation image rendered by the frame interpolation rendering thread. In this way, coherence and smoothness of overall rendering are maintained, a stable target frame rate can be maintained in rendering of the game picture, a rendering effect of the game picture is improved, and game experience of a user is further enhanced.

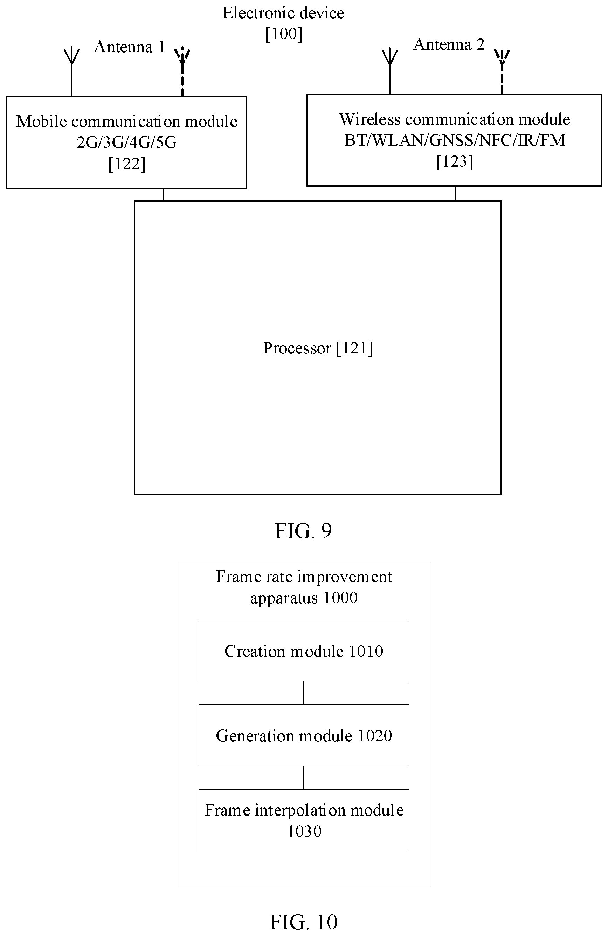

FIG. 9 is a diagram of a hardware structure of an electronic device according to an embodiment of this application. The electronic device may perform the foregoing frame rate improvement method. The electronic device 100 may be a mobile phone, a notebook computer, a wearable terminal device (for example, a smartwatch), a tablet computer, an augmented reality (augmented reality, AR) device, a virtual reality (virtual reality, VR) device, an in-vehicle device, or the like that is powered by a plurality of batteries.

The electronic device 100 may include a processor 121, an antenna 1, an antenna 2, a mobile communication module 122, a wireless communication module 123, and the like. It may be understood that the structure illustrated in this embodiment of the present invention does not constitute a specific limitation on the electronic device 100. In some other embodiments of this application, the electronic device 100 may include more or fewer components than those shown in the figure, and some components may be combined, some components may be split, or different component arrangements may be used. The components shown in the figure may be implemented by hardware, software, or a combination of software and hardware.

The processor 121 may include one or more processing units. For example, the processor 121 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors. For example, in this application, when it is determined that a frame rate of a game picture needs to be improved, the processor 121 creates a frame interpolation rendering thread, generates a frame interpolation image in the frame interpolation rendering thread based on frame rendering data, and inserts the frame interpolation image before or after an original image generated by a main rendering thread based on the frame rendering data. Therefore, when the frame rate of the game picture needs to be improved, the electronic device creates the frame interpolation rendering thread. The frame interpolation rendering thread may share a part of rendering tasks of the main rendering thread, so that the main rendering thread can have more time to perform processing for a complex scenario, real-time interaction, and the like, thereby reducing frame freezing, a delay, and the like caused by overload of the main rendering thread. In this way, a stable target frame rate can be maintained in rendering of the game picture, a rendering effect of the game picture is improved, and game experience of a user is further enhanced.

A memory may be further disposed in the processor 121, and is configured to store instructions and data. In some embodiments, the memory in the processor 121 is a cache memory. The memory may store an instruction or data just used or recycled by the processor 121. If the processor 121 needs to use the instruction or the data again, the processor may directly call the instruction or the data from the memory. This avoids repeated access and reduces waiting time of the processor 121, so that system efficiency is improved.

A wireless communication function of the electronic device 100 may be implemented by using the antenna 1, the antenna 2, the mobile communication module 122, the wireless communication module 123, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 122 may provide a solution to wireless communication applied to the electronic device 100, including 2G, 3G, 4G, 5G, or the like. The mobile communication module 122 may include at least one filter, a switch, a power amplifier, a low noise amplifier (low noise amplifier, LNA), and the like. The mobile communication module 122 may receive an electromagnetic wave by using the antenna 1, perform processing such as filtering and amplification on the received electromagnetic wave, and transmit the received electromagnetic wave to the modem processor for demodulation. The mobile communication module 122 may further amplify a signal obtained through modulation by the modem processor, and convert an amplified signal into an electromagnetic wave for radiation by using the antenna 1. In some embodiments, at least a part of functional modules of the mobile communication module 122 may be disposed in the processor 121. In some embodiments, at least a part of functional modules of the mobile communication module 122 and at least a part of modules of the processor 121 may be disposed in a same device.

The wireless communication module 123 may provide a solution to wireless communication applied to the electronic device 100, including a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 123 may be one or more devices integrating at least one communication processing module. The wireless communication module 123 receives an electromagnetic wave by using the antenna 2, performs frequency modulation and filtering on an electromagnetic wave signal, and sends a processed signal to the processor 121. The wireless communication module 123 may further receive a to-be-sent signal from the processor 121, perform frequency modulation and amplification on the to-be-sent signal, and convert a modulated and amplified signal into an electromagnetic wave for radiation by using the antenna 2.

An embodiment of this application further provides a computer-readable storage medium. The computer-readable storage medium stores a computer program or instructions. When the computer program or the instructions are run, functions or steps performed by the electronic device 100 in the foregoing method embodiment are implemented.

Another embodiment of this application further provides a computer program product including instructions. When the computer program product runs on a computer or a processor, the computer or the processor is enabled to perform one or more steps in any one of the foregoing methods.

FIG. 10 is a diagram of a frame rate improvement apparatus according to an embodiment of this application. The frame rate improvement apparatus 1000 includes a creation module 1010, a generation module 1020, and a frame interpolation module 1030.

The creation module 1010 is configured to: when it is determined that a frame rate of a game picture needs to be improved, create a frame interpolation rendering thread.

The generation module 1020 is configured to generate a frame interpolation image in the frame interpolation rendering thread based on frame rendering data.

The frame interpolation module 1030 is configured to insert the frame interpolation image before or after an original image generated by a main rendering thread based on the frame rendering data.

In conclusion, this application discloses a frame rate improvement apparatus. The created frame interpolation rendering thread may share a part of rendering tasks of the main rendering thread, so that the main rendering thread can have more time to perform processing for a complex scenario, real-time interaction, and the like, thereby reducing frame freezing, a delay, and the like caused by overload of the main rendering thread. Further, when the main thread is blocked, if the frame interpolation rendering thread is not blocked, the frame interpolation rendering thread may take over more rendering tasks. After the main thread returns normal, the frame interpolation rendering thread has completed a part or even all of rendering work. In this case, the main rendering thread may quickly catch up with the rendering progress, and merge the rendered original image into the frame interpolation image rendered by the frame interpolation rendering thread. In this way, coherence and smoothness of overall rendering are maintained, a stable target frame rate can be maintained in rendering of the game picture, a rendering effect of the game picture is improved, and game experience of a user is further enhanced.

Through the foregoing description of the implementations, a person skilled in the art may clearly understand that, for the purpose of convenient and brief description, division into the foregoing functional modules is merely used as an example for description. During actual application, the foregoing functions may be allocated to different functional modules and implemented based on a requirement. That is, an inner structure of an apparatus is divided into different functional modules, to implement a part or all of the functions described above. For specific working processes of the system, apparatus, and unit described above, refer to corresponding processes in the method embodiments. Details are not described herein again.

In the several embodiments provided in this embodiment, it should be understood that the disclosed system and method may be implemented in another manner. For example, the described embodiment is merely an example. For example, division into modules or units is merely logical function division, and there may be another division manner in actual implementation. For example, a plurality of units or components may be combined or integrated into another system. or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separated, and parts displayed as units may or may not be physical units, in other words, may be located in one place, or may be distributed on a plurality of network units. A part of or all of the units may be selected based on actual needs to achieve the objectives of the solutions of embodiments.

In addition, functional units in embodiments of this embodiment may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments essentially, or the part contributing to the conventional technology, or all or a part of the technical solutions may be implemented in the form of the software product. The computer software product is stored in a storage medium and includes several instructions for instructing a computer device (which may be a personal computer, a server, a network device, or the like) or a processor to perform all or a part of the steps of the methods described in embodiments. The foregoing storage medium includes any medium that can store program code, for example, a flash memory, a removable hard disk, a read-only memory, a random access memory, a magnetic disk, or an optical disc.

The foregoing description is merely specific implementation of this application, but are not intended to limit the protection scope of this application. Any change or replacement made within the technical scope disclosed in this application shall fall within the protection scope of this application. Therefore, the protection scope of this application should be subject to the protection scope of the claims.

## Claims

1. A frame rate improvement method, wherein the method comprises:
when it is determined that a frame rate of a game picture needs to be improved, creating a frame interpolation rendering thread;
generating a frame interpolation image in the frame interpolation rendering thread based on frame rendering data; and
inserting the frame interpolation image before or after an original image generated by a main rendering thread based on the frame rendering data.

2. The method according to claim 1, wherein when it is determined that the frame rate of the game picture needs to be improved, creating the frame interpolation rendering thread comprises:
when an electronic device is in a game scenario and the electronic device meets a frame interpolation condition, creating the frame interpolation rendering thread, wherein the frame interpolation condition comprises one or more of a load value of a graphics processing unit of the electronic device being greater than a first load threshold, a load value of a central processing unit of the electronic device being greater than a second load threshold, and a real-time game frame rate value of the electronic device being less than a frame rate threshold.

3. The method according to claim 1, wherein the frame rendering data in the frame interpolation rendering thread is transferred by the main rendering thread to the frame interpolation rendering thread, and the frame rendering data comprises one or more of texture data and camera data.

4. The method according to claim 1, wherein the frame rendering data in the frame interpolation rendering thread is created by the frame interpolation rendering thread, and the frame rendering data comprises context data.

5. The method according to claim 3, wherein a method in which the frame interpolation rendering thread receives the frame rendering data comprises:
after the frame rendering data in the main rendering thread is transferred to a circular queue of the frame interpolation rendering thread, the frame interpolation rendering thread receives the frame rendering data based on an order of the frame rendering data in the circular queue.

6. The method according to claim 3, wherein a method in which the frame interpolation rendering thread receives the frame rendering data comprises:
after a sequence number of the frame rendering data in the main rendering thread is copied to a shared data structure of the main rendering thread, the frame interpolation rendering thread receives the frame rendering data by matching the sequence number of the frame rendering data in the shared data structure.

7. The method according to claim 1, wherein after inserting the frame interpolation image generated by the frame interpolation rendering thread based on the frame rendering data before or after the original image generated by the main rendering thread based on the frame rendering data, the method further comprises:
when it is determined that the frame rate of the game picture does not need to be improved, generating an original image based on the frame rendering data in the main rendering thread.

8. The method according to claim 7, wherein when it is determined that the frame rate of the game picture does not need to be improved, generating the original image based on the frame rendering data in the main rendering thread comprises:
when an electronic device meets a frame interpolation stop condition, generating the original image based on the frame rendering data in the main rendering thread, wherein the frame interpolation stop condition comprises one or more of a real-time game frame rate value of the electronic device being greater than a frame rate threshold, execution duration of the main rendering thread being less than a first duration threshold, and execution duration of the frame interpolation rendering thread being less than a second duration threshold.

9. The method according to claim 7, wherein after generating the original image based on the frame rendering data in the main rendering thread, the method further comprises:
when a thread deletion condition is met, deleting the frame interpolation rendering thread.

10. The method according to claim 9, wherein when the thread deletion condition is met, deleting the frame interpolation rendering thread comprises:
obtaining a historical switching frequency, wherein the historical switching frequency is a ratio of a quantity of historical switching times to target time, and the quantity of historical switching times is a quantity of times of switching from generating a game picture based on the frame interpolation rendering thread and the main rendering thread to generating a game picture based on the main rendering thread; and
if the historical switching frequency is less than a frequency threshold, deleting the frame interpolation rendering thread.

11. The method according to claim 9, wherein when the thread deletion condition is met, deleting the frame interpolation rendering thread comprises:
obtaining historical switching time, wherein the historical switching time is time at which a game picture is generated last time based on the frame interpolation rendering thread and the main rendering thread; and
if a time difference between the historical switching time and current time is greater than a third duration threshold, deleting the frame interpolation rendering thread.

12. An electronic device, comprising a processor and a memory, wherein
the memory is configured to store computer-executable instructions; and
the processor is configured to execute the computer-executable instructions stored in the memory, to enable the processor to perform the method according to any one of claims 1 to 11.

13. A computer-readable storage medium, wherein the computer-readable storage medium stores a computer program or instructions, and when the computer program or the instructions are run, the method according to any one of claims 1 to 11 is implemented.

14. A computer program product, comprising a computer program or instructions, wherein when the computer program or the instructions are executed by a processor, the method according to any one of claims 1 to 11 is implemented.
